# EUROPEAN PATENT APPLICATION

(11) **EP 4 776 474 A1**
(43) Date of publication of application: **15.07.2026**
(21) Application number: 23948262.3
(22) Date of filing: 09.11.2023
(51) Int. Cl.: H02J 50/10, H02J 50/90, H02J 7/00, G05D 1/43

(54) **CHARGING METHOD, ROBOT, AND ROBOT CHARGING SYSTEM**

(30) Priority: 04.08.2023 CN 202310982055; 04.08.2023 CN 202322110001 U
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHU, Taotao, Shenzhen, Guangdong 518000 (CN); SONG, Yongqi, Shenzhen, Guangdong 518000 (CN); HAN, Baofeng, Shenzhen, Guangdong 518000 (CN)
(74) Representative: Abel & Imray LLP
(86) International application number: PCT/CN2023/130778
(87) International publication number: WO 2025/030699

(57) **Abstract**

The application provides a charging method, a robot and a robot charging system. The charging method comprises the following steps: after entering a charging state, a robot moves to a preset charging positioning point; taking the charging positioning point as a starting point, the robot moves to a charging area according to a preset route; the charging area is formed by an electric energy supply device; detecting whether a preset target charging position is reached in the process of moving along the preset route; when reaching the target charging position, controlling the robot to stop moving, and receiving electric energy provided by the electric energy supply device through an electric energy receiving device in the robot.

## Description

The application claims the benefit of China patent application No. 202310982055.6, filed on August 4, 2023, titled "Charging method, robot and robot charging system", the contents of which are incorporated herein by reference in their entirety.

The application claims the benefit of China patent application No. 202322110001.9, filed on August 4, 2023, titled "Charging base and robot charging system", the contents of which are incorporated herein by reference in their entirety.

### Technical field

The application relates to the technical field of robot charging, in particular to a charging method, a robot and a robot charging system.

### Background

With the continuous development of electronic information technology, more and more intelligent robots have been widely used in different daily-life scenarios. For example, cleaning the family yard, removing snow, collecting fallen leaves and other objects.

Usually, batteries and motors are used as the main power sources for these intelligent robots to automatically perform tasks in specific work areas. In order to ensure a smooth process of work tasks, intelligent robots usually have automatic charging function (which can also be referred to as recharging function for short), and can charge themselves when their own power is low, so as to restore power.

Typically, the intelligent robots will return to the position of charging base through the positioning method based on camera identification, laser radar signature or infrared radar signature. Electrical connection with charging base is established through charging contacts, etc., so as to realize automatic charging. For example, as described in the related art, it guides the robot to move to the robot charging base by means of laser radar signature. The robot moved to the robot charging base can establish electrical connection through the electrical energy output conductor to charge itself.

However, the inventor found that such automatic charging implementation solution has many defects. For example, the positioning is easily influenced and interfered by bad weather (such as strong light, rain and snow), resulting in incorrect positioning and failure to return to the position of the robot charging base. Moreover, the solution of positioning method is complicated and the implementation cost is high.

### Summary of the invention

The existing automatic charging method is easily disturbed by bad weather, and its implementation cost is high and the safety of outdoor setting is poor. In order to solve this technical problem, the embodiment of the application provides a charging method, a robot and a robot charging system.

The embodiment of the application adopts the following technical solutions to solve the technical problems:
The application discloses a charging method. The method comprises the following steps: after entering a charging state, a robot moves to a preset charging positioning point; taking the charging positioning point as a starting point, the robot moves to a charging area according to a preset route; the charging area is formed by an electric energy supply device; detecting whether a preset target charging position is reached in the process of moving along the preset route; when reaching the target charging position, controlling the robot to stop moving, and receiving electric energy provided by the electric energy supply device through an electric energy receiving device in the robot.

According to the charging method, a charging positioning point close to the target charging position is preset in addition to the target charging position, so that the positioning time of the robot can be greatly shortened, and the robot can quickly move to the position where the charging base is located.

The application also discloses a robot. The robot includes: a working device; the working device is configured to execute work tasks correspondingly; a robot body; the robot body is fixedly connected with the working device and configured to drag the working device to move; an electric energy receiving device; the electric energy receiving device is arranged on the robot body;
a sensor; the sensor is arranged on the robot body; and the robot body is configured to perform the charging method as described above.

The application also discloses a robot charging system. The robot charging system comprises the robot as described above; a charging base; an electric energy supply device and a plurality of positioning coils are arranged in the charging base; a RTK base station and a corresponding RTK antenna; the RTK antenna is arranged on the robot; and the electric energy supply device forms a charging area; the plurality of positioning coils are arranged at different positions for providing direction and position information guidance for the robot.

The charging method provided by the embodiment of the application can greatly shorten the positioning time of the robot by presetting a similar charging positioning point in addition to the target charging position, which is beneficial for the robot to quickly move to the position where the charging base is located.

Details of one or more embodiments of the application are set forth in the following drawings and descriptions, and other features and advantages of the application will be apparent from the description, drawings and claims.

### Brief description of drawings

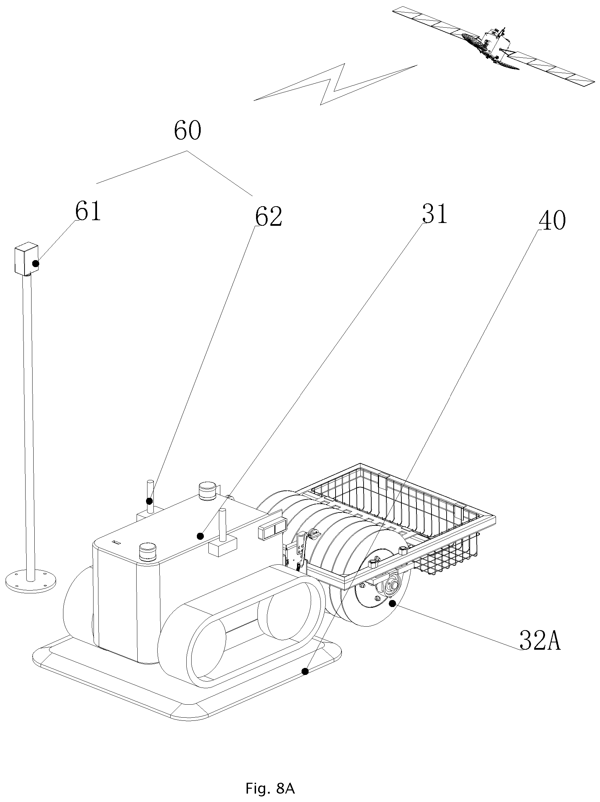

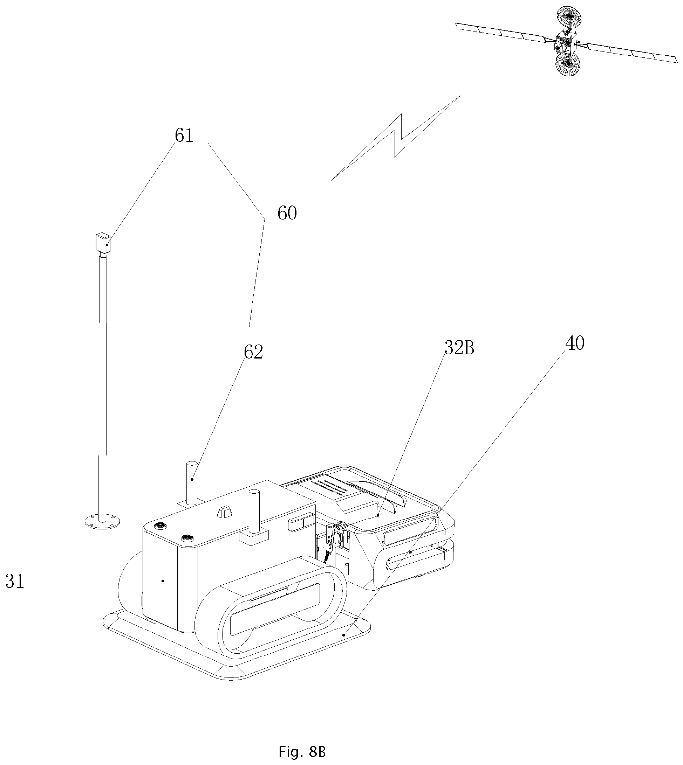

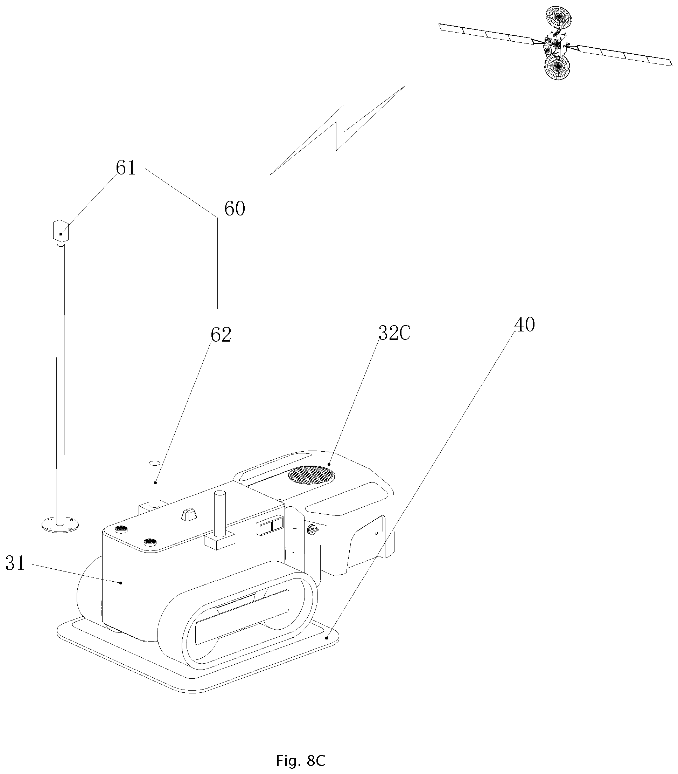

One or more embodiments are illustrated with corresponding drawings, which do not constitute a limitation of the embodiments. Elements with the same reference signs in the drawings represent similar elements, and the drawings do not constitute a scale limitation unless otherwise specified.
Fig. 1 is a schematic diagram of a contactless power transmission system according to an embodiment of the present application.
Fig. 2 is a schematic diagram of a robot charging system according to an embodiment of the present application, showing the situation when the working device is a snow removal device.
Fig. 3 is a schematic diagram of a robot according to an embodiment of the present application.
Fig. 4 is a schematic diagram of a charging base according to an embodiment of the present application.
A of Fig. 5 is a schematic diagram of an automatic charging process according to an embodiment of the present application, showing the situation that the robot moves to a charging positioning point.
B of Fig. 5 is a schematic diagram of an automatic charging process according to an embodiment of the present application, showing the situation that the robot moves from the charging positioning point to the charging base.
C of Fig. 5 is a schematic diagram of an automatic charging process according to an embodiment of the present application, showing the relative position change between the sensor and positioning coil.

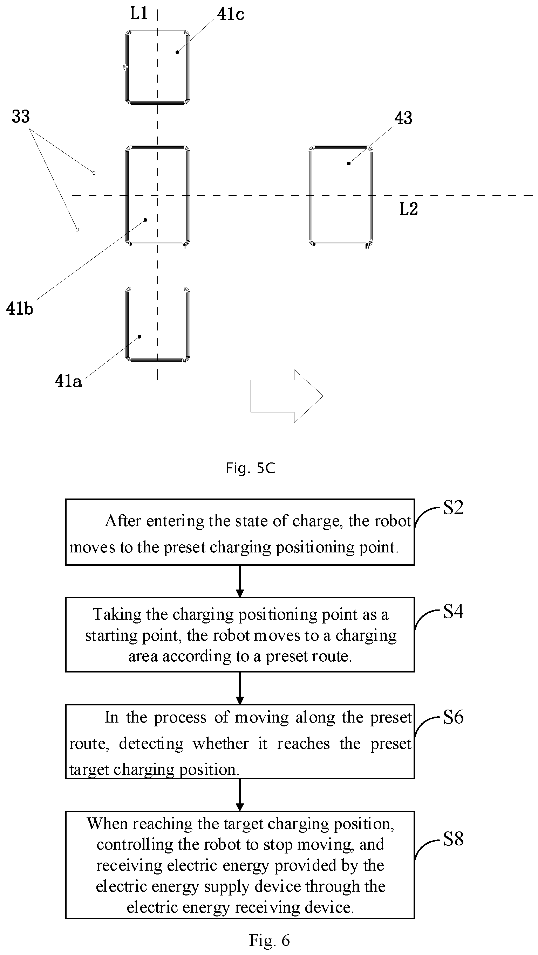

Fig. 6 is a flow chart of a charging method according to an embodiment of the present application.

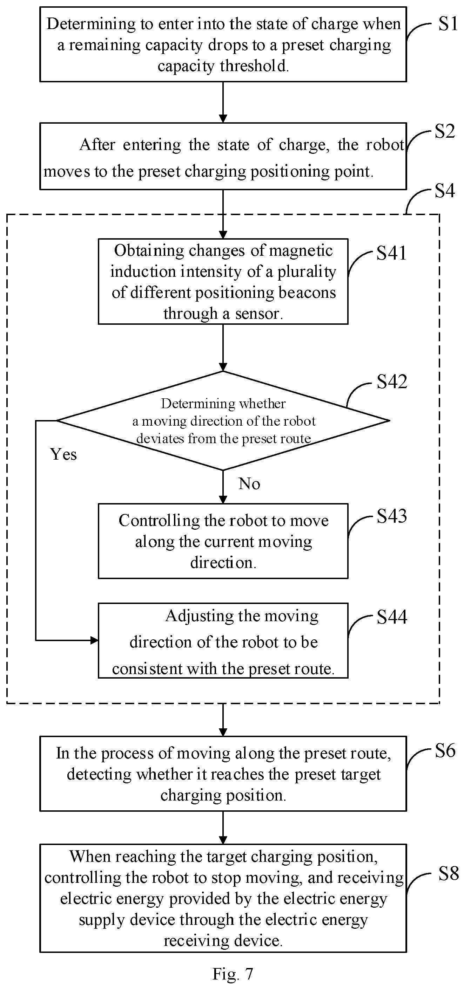

Fig. 7 is a flow chart of a charging method according to another embodiment of the application.
A of Fig. 8 is a schematic diagram of a robot charging system according to an embodiment of the present application, showing the situation when the working device is a golf ball recycling device.
B of Fig. 8 is a schematic diagram of a robot charging system according to an embodiment of the present application, showing the situation when the working device is a mowing device.
C of Fig. 8 is a schematic diagram of a robot charging system according to an embodiment of the present application, showing the situation when the working device is a leaf cleaning device.

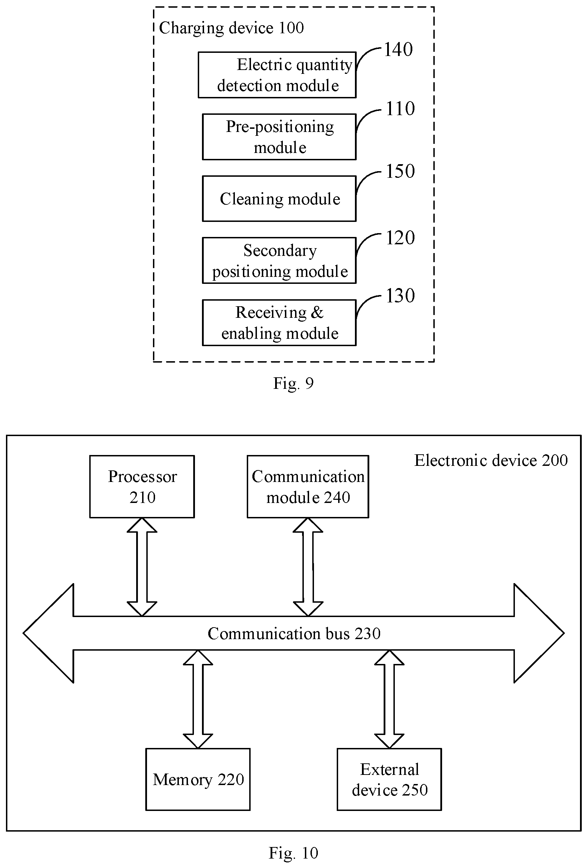

Fig. 9 is a functional block diagram of a charging device according to an embodiment of the present application.
Fig. 10 is a schematic diagram of an electronic device according to an embodiment of the present application.

Reference signs in the figures are as follows:
Electric energy supply device 10; Power supply 11; Power management module 12; Transmitting coil 13;
Electric energy receiving device 20; Charging circuit 21; Conversion circuit 22; Receiving coil 23;
Robot 30; Robot body 31; Working device 32; Golf ball recycling device 32a; Mowing device 32b; Leaf cleaning device 32c; Sensor 33;
Charging base 40; First positioning beacon 41a; Second positioning beacon 41b; Third positioning beacon 41c; Base housing 42; In-position detection coil 43;
Charging positioning point 50;
RTK positioning system 60; RTK base station 61; RTK antenna 62;
Charging device 100; Pre-positioning module 110; Secondary positioning module 120; Receiving & enabling module 130; Electric quantity detection module 140; Cleaning module 150;
Electronic device 200; Processor 210; Memory 220; Communication bus 230; Communication module 240; External device 250.

### Detailed description

In order to facilitate the understanding of this application, the application will be described in more detail with the attached drawings and specific embodiments. It should be noted that when an element is referred to as being "fixed" on another element, it may be directly on the other element, or there may be one or more intervening elements. When an element is referred to as being "connected" to another element, it may be directly connected to the other element, or there may be one or more intervening elements. It should be understood that the orientations or positional relationships indicated by the terms "upper", "lower", "inner", "outer", "vertical", "horizontal" and the like are based on the orientations or positional relationships shown in the attached drawings, only for convenience of describing the present invention and simplifying the description, and do not indicate or imply that the said device or element must have a specific orientation, be constructed or operated in a particular orientation, and therefore cannot be understood as a limitation of the present invention.

In addition, the terms "first", "second" and so on are merely used for descriptive purposes and shall not be understood as indicating or implying relative importance. Similar words such as "comprising" or "including" mean that the elements or objects appearing before the word comprise the elements or objects listed after the word and their equivalents, without excluding other elements or objects. Similar words such as "connection or "connected" are not limited to physical or mechanical connection, but may include electrical connection, whether direct or indirect. Unless otherwise defined, the features such as "parallel", "vertical" and "identical" used in the embodiments of the present application all include cases such as "parallel", "vertical" and "identical" in a strict sense, and cases such as "approximately parallel", "approximately vertical" and "approximately identical" with certain errors. For example, the above-mentioned "approximately" can mean that the difference of the compared objects is within 10% or 5% of the average value of the compared objects. When the number of one component or element is not specified in the following of the embodiments of the application, it means that the component or element may be one or more, or may be understood as at least one. "At least one" means one or more, and "multiple" means at least two.

Unless otherwise defined, all technical and scientific terms used in this specification have the same meaning as commonly understood by those skilled in the art. The terminology used in the specification of this application is only for the purpose of describing specific embodiments, and is not used to limit this application. The term "and/or" as used in this specification includes any and all combinations of one or more related listed items.

In addition, the technical features involved in different embodiments of the application described below may be combined with each other as long as they do not conflict with each other. Obviously, the described embodiments are parts of the embodiments of this application, not all embodiments. Based on the described embodiments of the application, all other embodiments obtained by persons having ordinary skill in the art without creative efforts belong to the protection scope of the application.

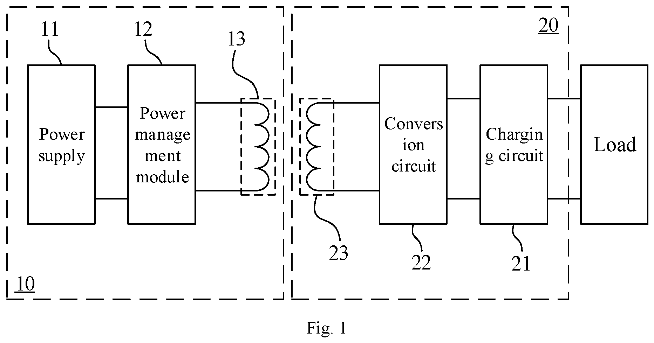

Fig. 1 is a schematic diagram of a contactless power transmission system provided by an embodiment of the present application. The contactless electric energy transmission system mainly utilizes the principle of electromagnetic induction, and energy is coupled through the transmitting coil and the receiving coil, so as to realize mutual energy transfer.

As shown in Fig. 1, the contactless power transmission system may be composed of an electric energy supply device 10 and an electric energy receiving device 20.

The electric energy supply device 10 may include a power supply 11, a power management module 12, and a transmitting coil 13. The electric energy receiving device 20 includes a charging circuit 21, a conversion circuit 22 and a receiving coil 23.

In the actual power transmission process, the power supply 11 may be DC or AC, which is connected to the power management module 12, converted into high-frequency AC by the power management module 12 via inverter, and then supplied to the transmitting coil 13.

When the transmitting coil 13 and the receiving coil 23 are close to each other, they can be coupled with each other, and the receiving coil 23 can receive energy from the transmitting coil 13. The current output by the receiving coil 23 can be changed into direct current via the conversion circuit 22 and then supplied to the charging circuit 21. Finally, the charging circuit 21 provides suitable target current and voltage for the load such as battery.

It should be noted that in the embodiment of this application, different modules are given different names according to their functions. However, those skilled in the art can understand that it can choose or determine the implementation mode of each functional module according to the actual needs, and it is not specifically defined here.

In some embodiments, the aforementioned electric energy supply device 10 may be arranged on the charging base, and the electric energy receiving device 20 may be arranged on the robot. Therefore, when the robot moves to the appropriate position of the charging base to enable the transmitting coil 13 and the receiving coil 23 to be close to each other, the battery mounted on the robot can be charged through the above-mentioned contactless power transmission mode. In this application, for brevity, the coverage of the area where the transmitting coil 13 can be coupled with the receiving coil 23 is called charging area. In other words, after the receiving coil 23 enters the charging area, the transmitting coil 13 can transfer electric energy to the receiving coil 23 in a contactless manner by electromagnetic coupling. That is, in an embodiment, the electric energy receiving device 20 is configured to be coupled with the electric energy supply device 10 of the charging base 40 to receive electric energy from the electric energy supply device 10 in a contactless manner when entering the charging area.

The charging base and the robot provided by the embodiment of the application are charged in a contactless electric energy transmission mode, so that all charging related device can be enclosed inside the housing, and the problems and defects of poor contact and environmental sensitivity when the contact electrode is placed outdoors are effectively avoided. Moreover, the power transmission mode based on electromagnetic induction effect allows the transmitting coil and the receiving coil to have certain errors in all directions, without the close contact required by contact electrodes, which can effectively reduce the requirements for robot positioning accuracy.

Alternatively, other suitable power transmission modes may be adopted to realize the charging of robot by charging base, which is not limited to the above-mentioned contactless wireless charging mode.

In addition, in order to realize the function of automatic charging, in addition to the contactless power transmission system shown in Fig. 1, it is necessary to provide an additional positioning system or related positioning coils to help the robot move smoothly to the position where the charging base is located.

In some embodiments, the robot can use two or more positioning methods (also called fusion positioning method) to determine the relative position relationship between itself and the charging base, so as to achieve the mutual proximity of the electric energy supply device and the electric energy receiving device and realize the mutual power transmission.

Specifically, the fusion positioning method may be realized by combining RTK positioning mode and magnetic induction intensity positioning mode.

RTK positioning is a positioning method based on carrier phase differential technology (Real Time Kinematic). It is mainly composed of RTK base station and RTK antenna. RTK base station collects satellite data, and transmits its observation value and site coordinate information to the mobile station equipped with RTK antenna through data link. The mobile station obtains its three-dimensional positioning results in the specified coordinate system by performing real-time carrier phase differential processing on the collected satellite data and the received data link.

"Magnetic induction intensity positioning" is a positioning method based on sensor and multiple coils (in other embodiments, it may also be collectively referred to as "positioning coil"). When current is applied to the coil, it can form a magnetic field with a specific intensity, which is arranged on the charging base. The sensor is arranged on the robot. When the relative position between the sensor and the coil changes with the movement of the robot, the magnetic induction intensity detected by the sensor will also change accordingly. Therefore, when the position of the coil is fixed, the relative position relationship between the sensor and the coil can be determined by the numerical value of the magnetic induction intensity, and then the current relative position relationship (for example, direction information or position information) between the robot and the charging base can be determined.

In the actual automatic charging process, the robot can be guided to move to a specific position closer to the charging base by RTK positioning (in other embodiments, this specific position may be called charging positioning point). Then, from this specific position, the robot moves to the target charging position more accurately by magnetic induction intensity positioning, so that the receiving coil 23 enters the charging area formed by the transmitting coil 13. Finally, the contactless power transmission system is activated to charge the battery carried by the robot.

The fusion positioning mode provided by the embodiment of the application, which combines RTK positioning and magnetic induction intensity positioning, can effectively improve the positioning accuracy and overcome a series of defects existing in a single positioning mode, such as insufficient RTK positioning accuracy and possible poor GPS signals or RTK signals.

Moreover, compared with the traditional optical positioning method, the positioning method based on the change of magnetic induction intensity has strong anti-interference ability in outdoor environment and is not easy to be affected and interfered by bad weather. It can be realized simply based on coil and sensor, and the overall cost is lower.

According to the application idea provided by the embodiment of the application, it can be generally applied to the intelligent robots. However, for the convenience of description and understanding, the robot equipped with snow removal equipment will be taken as an example to illustrate this application.

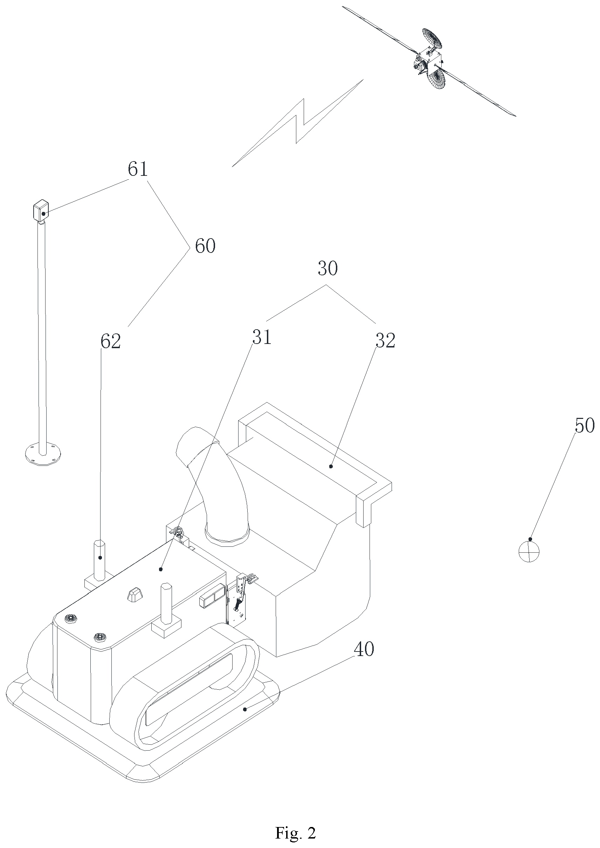

Fig. 2 is a schematic diagram of a robot charging system provided by an embodiment of the present application. As shown in Fig. 2, the robot charging system may include a movable robot 30, a charging base 40, a charging positioning point 50 and an RTK positioning system 60.

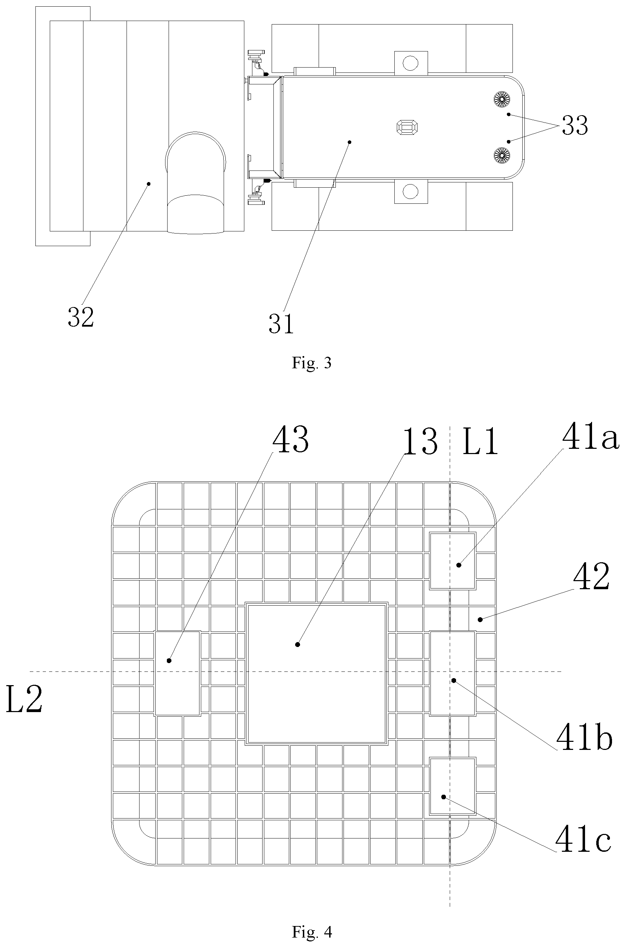

The robot 30 is an intelligent device with a driving mechanism that can move on the ground in a controlled or autonomous manner. As shown in Fig. 3, the robot 30 may include a robot body 31, a working device 32 and a sensor 33.

The robot body 31 is the main part of the whole robot 30, which may be designed as any suitable shape, size or structure according to the actual needs, and is not specifically defined here. As a carrying platform, robot body 31 can fixedly carry one or more functional components to realize different functions.

The working device 32 is a component for performing a specific work task. It may be fixedly connected to the robot body 31, and the robot body 31 moves under the load and performs corresponding work tasks. For example, the task of sweeping snow in a specific area.

The sensor 33 is a sensor device for sensing changes in magnetic induction intensity. It may be fixed on the robot body 31, which can play a corresponding positioning role when the robot body 31 approaches the charging base 40. In some embodiments, the sensor 33 may be arranged in pairs with a certain distance between a pair of magnetic induction sensors.

Specifically, please continue to refer to Fig. 3. The working device 32 may be arranged at a front part of the robot body 31, while the electric energy receiving device and the sensor 33 may be arranged at a rear part of the robot body 31, which are located at two ends of the robot body that are far away from each other.

Charging base 40 is a device that is set in a specific position and may be connected with power supply. It may be designed as any suitable shape according to the actual needs. For example, as shown in Fig. 4, it may be a roughly square horizontal structure, and both the electric energy supply device and the positioning coil are accommodated in the charging base. Preferably, as shown in Fig. 2, the edge of the charging base 40 may also be designed as an inclined plane to facilitate the robot to climb the upper surface of the charging base.

In some embodiments, the charging base 40 further includes a base housing 42, the electric energy supply device 10 is accommodated in the base housing 42, and a charging area is formed on at least a part of the surface of the base housing 42. Different positioning coils are arranged at different positions of the base housing 42 for forming corresponding magnetic fields. The charging base 40 and the robot 30 provided by the embodiment of the application are charged in a contactless electric energy transmission mode, so that all charging related device can be enclosed inside the base housing 42, and the problems and defects of poor contact and environmental sensitivity when the contact electrodes are placed outdoors are effectively avoided.

In some embodiments, the transmitting coil 13 of the electric energy supply device may be arranged in the center of the charging base 40 to form a charging area on the upper surface of the charging base. Further, the transmitting coil 13 is located in the center of the base housing 42, and the charging area is formed on the upper surface of the base housing 42.

In some embodiments, the positioning coil includes:
a plurality of positioning beacons; the positioning beacons are arranged at a preset distance along a first straight line direction;
an in-position detection coil 43, the in-position detection coil is located at one side of the transmitting coil 13, and the positioning beacon is arranged at the other side of the transmitting coil 13.

In a further embodiment, please continue to refer to Fig. 4. Several positioning beacons include: first positioning beacon, second positioning beacon and third positioning beacon. Specifically, several positioning beacons of the positioning coil may include: first positioning beacon 41a, second positioning beacon 41b, and third positioning beacon 41c. The first positioning beacon 41a, the second positioning beacon 41b and the third positioning beacon 41c are sequentially arranged at intervals along a first straight line direction L1. The second positioning beacon 41b, the transmitting coil 13 and the in-position detection coil 43 are sequentially arranged along a second straight line direction L2. The first straight line direction L1 is perpendicular to the second straight line direction L2, and the widths of the second positioning beacon 41b and the in-position detection coil 43 in the first straight line direction are larger than those of the first positioning beacon 41a and the third positioning beacon 41c.

The first positioning beacon 41a, second positioning beacon 41b, and third positioning beacon 41c may be arranged at intervals along the first straight line direction L1, and located at one side of the transmitting coil 13. The in-position detection coil 43 is located on the opposite side of transmitting coil 13. The in-position detection coil 43, transmitting coil 13 and second positioning beacon 41b are sequentially arranged along the second straight line direction L2. The first straight line direction L1 and second straight line direction L2 are perpendicular to each other. In an embodiment, the robot is provided with two sensors 33 arranged at intervals. The width of the second positioning beacon 41b may be designed to be larger than the interval between two sensors 33. The widths of the first positioning beacon 41a and the third positioning beacon 41c are smaller than the interval between the two sensors 33. The width of the in-position detection coil 43 is also larger than the interval between the two sensors 33.

At least one beneficial aspect of the charging base provided by the embodiment of the application is that the method of facilitating accurate positioning by using the change of magnetic induction intensity provided by the positioning coil has stronger anti-interference ability compared with the conventional optical positioning method, and is not easily influenced by bad weather or environment. And the implementation cost is lower.

Another beneficial aspect of the charging base provided by the embodiment of the application is that the robot is charged in a contactless electric energy transfer mode, so that the whole electric energy supply device can be enclosed in the housing, providing effective and comprehensive protection, thereby well avoiding a series of defects of contact electrodes (for example, poor contact caused by easy oxidation when exposed to the outdoors). Moreover, this charging method allows a certain degree of positioning deviation between the transmitting coil and the receiving coil, thereby eliminating the guiding structure on the robot and/or the charging base.

In some embodiments, the robot charging system further includes:
a charging positioning point 50. There is a preset interval between the charging positioning point 50 and the charging base 40; the charging positioning point 50 is a preset specific position close to charging base 40. It can designate any suitable position as the charging positioning point 50 according to the actual needs. For example, a position with a distance of 1m from the charging base 40 may be selected as the charging positioning point 50. Preferably, a position with no obstruction or strong RTK signal may be selected as the charging positioning point 50, so that the robot can conveniently determine its position through RTK positioning technology and move to the charging positioning point 50.

In an embodiment, the robot is provided with two sensors 33 arranged at intervals. Further, the sensor 33 is configured to cooperate with the positioning coil of the charging base 40 to guide the robot 30 located at the charging positioning point 50 to move directionally, so that the electric energy receiving device 20 can enter the charging area of the charging base 40.

RTK positioning system 60 is a positioning system based on carrier phase differential technology (Real Time Kinematic). Please continue to refer to Fig. 1. The RTK positioning system 60 may include an RTK base station 61 and an RTK antenna 62.

The RTK antenna 62 is fixedly arranged on the robot body 31, and in one embodiment, the RTK antenna 62 is configured to guide the robot 30 to move to the charging positioning point 50. That is, in this embodiment, the position information of the robot 30 may be provided through the RTK positioning system to guide the robot 30 to move to the charging positioning point 50.

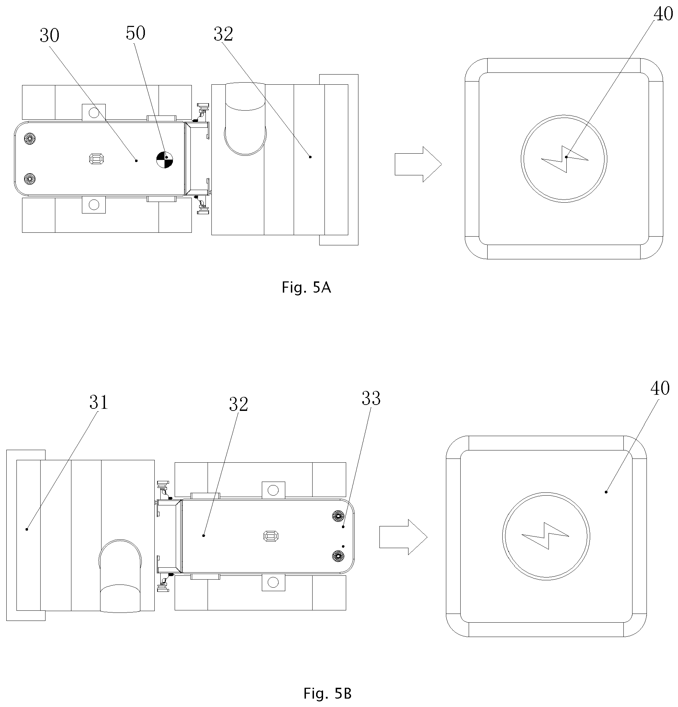

In order to fully describe the working principle and implementation process of this application, the specific operation process of the robot charging system shown in Fig. 2 will be described in detail with the attached drawings.
1) As shown in A of Fig. 5, under the guidance of RTK positioning system, the robot 30 is controlled to move to charging positioning point 50. At this time, the working device 32 of the robot faces the charging base 40. Then, the robot 30 moves to the charging base 40 and clears the snow on the charging base through the working device. Finally, after the snow is cleared, the robot moves back and returns to the charging positioning point.
2) As shown in B of Fig. 5, the robot returning to the charging positioning point 50 can rotate by 180 degrees, so that the rear end provided with the receiving coil and the sensor 33 faces the charging base 40. Then, by moving back, move to the direction where the charging base 40 is located.
3) As shown in C of Fig. 5, during the movement of the robot, a pair of sensors 33 will continuously approach the first positioning beacon 41a, second positioning beacon 41b and third positioning beacon 41c. The first positioning beacon 41a, second positioning beacon 41b and third positioning beacon 41c are coils formed by winding multiple turns of single strand. After the coil is energized, according to the right-hand rule, a magnetic field perpendicular to the paper surface will be formed. In this embodiment, the first positioning beacon 41a, second positioning beacon 41b and third positioning beacon 41c respectively form a first magnetic field, a second magnetic field and a third magnetic field with different frequencies, so as to facilitate sensor identification and confirmation. Specifically, the first positioning beacon 41a is used to generate a first magnetic field. The second positioning beacon 41b is used to generate a second magnetic field. The third positioning beacon 41c is used to generate a third magnetic field. Wherein the first magnetic field, second magnetic field and third magnetic field have different magnetic field frequencies. When the robot climbs up the charging base according to the correct position and direction (i.e., the preset route), a pair of sensors 33 are located inside the second positioning beacon 41b and have specific magnetic induction intensity. If one of the sensors 33 is located in the first positioning beacon 41a instead of the second positioning beacon 41b, it can be determined that the moving direction of the robot has shifted to the left at this time, and accordingly the moving direction of the robot will be adjusted to the right (specifically, the robot will exit the charging base first, readjust and then return to the charging base). If one of the sensors 33 is located in the third positioning beacon 41c instead of in the second positioning beacon 41b, it can be determined that the moving direction of the robot has shifted to the right at this time, and accordingly the moving direction of the robot will be adjusted to the left accordingly (specifically, the robot will exit the charging base first, readjust and then return to the charging base).

Therefore, the robot can confirm the direction or position error through the change of magnetic induction intensity, and adjust the moving posture of the robot accordingly to ensure that the robot moves into the charging area with the correct posture.

In-position detection coil 43 is also a coil formed by winding multiple turns of single strand. It is arranged to the other side of the transmitting coil. When the robot moves to the target charging position (i.e., the position where the transmitting coil is opposite to the receiving coil), a pair of sensors 33 will be located inside the in-position detection coil 43. The robot can determine that the sensor 33 has moved from the outside of the in-position detection coil 43 to the inside of the detection coil 43 by the magnetic induction intensity reaching a specific intensity threshold, thereby determining that the robot has moved into position.

In some embodiments, before the automatic charging, the user can also perform a series of initialization operation steps to determine and set the charging positioning point and the target charging position in the automatic charging process.

The initialization steps include: firstly, under the guidance of RTK positioning system, move the robot to a specific position with strong GPS signal and network signal as point A. Then, place and fix the charging base behind the robot, and set the position Im away from the front of the charging base as the charging positioning point (it is necessary to ensure that there is no obstacle that the robot cannot cross between the charging positioning point and the charging base). Finally, the robot is controlled to move to the charging area of the charging base, and the opposite position between the transmitting coil and the receiving coil at this time is set as the target charging point.

It should be noted that the above initialization step does not need to be repeated under the condition that the position of the charging base has not changed. When the position of the charging base changes, such as being moved from one side of the garden to the other, the initial setting step needs to be re-executed.

Fig. 6 is a flow chart of the charging method provided by the embodiment of the application. This charging method may be executed by the robot in the aforementioned embodiment to help realize the automatic charging function of the robot. As shown in Fig. 6, the method comprises the following steps.

S2. After entering the state of charge, the robot moves to the preset charging positioning point.

The term "state of charge" refers to the state when the robot needs to move to charging base for charging. In this embodiment, the term "state of charge" is used to distinguish it from the normal working state. In other words, after entering the state of charge, the robot needs to perform a series of steps of the charging method and move to the charging area of the charging base for charging.

In some embodiments, step S2 specifically includes:determining the charging positioning point according to a position of the electric energy supply device, wherein a distance between the charging positioning point and the electric energy supply device is a preset distance threshold; and controlling the robot to move to a preset signal intensity point based on a position information provided by RTK positioning system, and controlling the robot to move to the charging positioning point based on the signal intensity point.

The charging positioning point is preset, with a certain distance from the charging base and close to the positioning point. The preset distance may be designed to be 1m, or other suitable distance. Just make sure there is no obstacle between the charging positioning point and charging base.

S4. Taking the charging positioning point as a starting point, the robot moves to a charging area according to a preset route.

The "charging area" refers to a specific area in which the electric energy supply device can be coupled with the electric energy receiving device of the robot to realize electric energy transfer. It can be specifically determined by the arrangement position of the transmitting coil of the electric energy supply device.

The "preset route" is the moving direction and position determined by the positions of the charging positioning point and charging base. It shows the correct position and direction of the robot moving from the charging positioning point to the charging area. In other words, when the robot moves according to the preset route, it can climb the charging base and reach the charging area.

In some embodiments, please continue to refer to Fig. 7. Step S4 specifically includes the following steps.

S41. Obtaining changes of magnetic induction intensity of a plurality of different positioning beacons through a sensor.

The positioning beacon is a component that can form a magnetic field with a specific intensity. For example, a coil formed by winding a single strand. Different positioning beacons can form magnetic fields with different frequencies to facilitate sensor confirmation and identification. Accordingly, the sensor is an electromagnetic sensor that can sense the magnetic induction intensity.

A plurality of positioning beacons are arranged at different positions of the charging base, so that the sensor can detect the corresponding magnetic induction intensity change along with the movement of the robot.

S42. Determining whether a moving direction of the robot deviates from the preset route according to the changes of magnetic induction intensity of different positioning beacons. If no, proceed to step S43. If yes, proceed to step S44.

Because a plurality of different positioning beacons are located in different positions, with the change of the relative position between the sensor and these positioning beacons, the magnetic induction intensity would also change accordingly. Therefore, the sensor can accurately confirm whether the moving direction of the robot conforms to the preset route (i.e. whether it can move to the charging base in the right direction) based on the changes of the magnetic induction intensity of these positioning beacons.

S43. Controlling the robot to move along the current moving direction.

When there is no deviation in the moving direction, it indicates that the moving direction is correct at this time, and the robot can be controlled to continue moving.

S44. Adjusting the moving direction of the robot to be consistent with the preset route.

When the moving direction deviates, it is necessary to adjust the moving direction of the robot to make it return to the correct moving direction.

Specifically, based on the charging base shown in Fig. 4, the above steps S42-S44 can be realized by the following methods.

In one aspect, when the sensor in the robot only acquires the second magnetic field, it is determined that the moving direction of the robot does not deviate from the preset route.

In another aspect, when the sensor in the robot acquires the first magnetic field formed by the first positioning beacon or the third magnetic field formed by the third positioning beacon, it is determined that the moving direction of the robot deviates from the preset route. It can be understood that when the sensor in the robot obtains the first magnetic field, it indicates that the moving direction of the robot is shifted to the left and needs to be adjusted to the right. When the sensor in the robot obtains the third magnetic field, it indicates that the moving direction of the robot is shifted to the right and needs to be adjusted to the left.

Preferably, the adjusting method for moving direction is specifically as follows.

Firstly, when the sensor in the robot acquires the first magnetic field, the robot is controlled to move back by a preset first distance. The first distance may be an empirical value, which is set by technicians according to the needs of the actual situation, so long as the robot can exit the charging base. Then, after moving back by the first distance, the robot is controlled to move to the right by a preset second distance. Similarly, the second distance is also a numerical value set by technicians according to the actual situation, which is mainly determined by the distance between the first positioning beacon and the second positioning beacon, the width of the robot, etc. Finally, after moving by the second distance to the right, the robot body is rotated by a certain angle (so that the charging position of the robot corresponds to the charging area), and the robot is controlled to move backward to the charging area again. After moving by the second distance to the right, it can be basically confirmed that the robot has completed the correction of position and moving direction, and can move to the charging base again and reach the target charging position.

In addition, when the sensor in the robot obtains the third magnetic field, the robot is first controlled to move back by the first distance. Then, the robot is controlled to move by the second distance to the left. Finally, after moving by the second distance to the left, the robot is controlled to move backward to the charging area again.

S6. In the process of moving along the preset route, detecting whether it reaches the preset target charging position.

The "target charging position" refers to the position where the robot is located when the transmitting coil and the receiving coil are roughly corresponding. Roughly corresponding is a concept of scope. For example, an error of about 3cm may be allowed between two coils.

In some embodiments, step S6 may specifically include the following.

First, after passing through the second positioning beacon, the robot is controlled to move continuously. Then, while the robot continues to move, the magnetic induction intensity is detected by the sensor. Then, according to the magnetic induction intensity, it is determined whether the sensor moves to the inside of the in-position detection coil. Finally, when it is determined that the sensor moves to the inside of the in-position detection coil, it is determined that the robot has reached the preset target charging position.

Specifically, the specific implementation of determining whether the sensor moves to the inside of the in-position detection coil according to the magnetic induction intensity may be realized by the following steps.

Firstly, the sensor is used to detect whether the magnetic induction intensity exceeds the preset intensity threshold.

The preset intensity threshold is a numerical value set according to the actual situation, which is used to measure the proximity between the sensor and the in-position detection coil. Then, when the magnetic induction intensity is greater than a preset intensity threshold, it is determined whether the sensor moves to the inside of the in-position detection coil. When the magnetic induction intensity is not greater than a preset intensity threshold, it is determined that the sensor does not move to the inside of the in-position detection coil.

Because the position of in-position detection coil is fixed, when it exceeds the specific intensity threshold, it can be basically confirmed that the sensor has moved in place at this time. For example, when the sensor has moved with the robot into the inside of the in-position detection coil, the magnetic induction intensity would significantly increase and exceed the preset intensity threshold. At this point, it can be determined that the robot has moved in place and reached the target charging position.

S8. When reaching the target charging position, controlling the robot to stop moving, and receiving electric energy provided by the electric energy supply device through the electric energy receiving device.

When the robot reaches the target charging position, it indicates that the electric energy receiving device is already in the charging area and can be coupled with the electric energy supply device, so as to realize the power transmission.

In some embodiments, the power transmission may be realized in a "contactless" manner. The term "contactless" refers to the establishment of electrical connection with contact electrodes, and the spatial electric energy transfer is realized through electromagnetic field induction. The charging base can enable the electric energy supply device, and realize the charging of the battery of the robot through it and the electric energy receiving device on the robot.

One of the advantages of the automatic charging method provided by the embodiment of the application is that, the contactless charging method can make the related components of the electric energy supply device, such as the transmitting coil, be accommodated and protected in the base housing. This structural design can ensure that the components will not be exposed, effectively avoid problems such as poor contact caused by electrode oxidation, and can better meet the needs of outdoor layout.

Another advantageous of the automatic charging method provided by the embodiment of the application is that, the positioning requirements of the robot moving to the charging base can be well met through the fusion positioning mode combining the RTK positioning system and the magnetic induction positioning system, which can not only avoid the insufficient positioning accuracy of a single RTK positioning system, but also address the problem of weak or lost RTK signal caused by the influence of obstacles such as eaves and shade, and has strong anti-interference ability, and can still be used normally in bad weather such as rain and snow.

Fig. 7 is a flow chart of the charging method provided by another embodiment of the present application. As shown in Fig. 7, before performing step S2, the method may further include the following.

S1. Determining to enter into the state of charge when a remaining capacity drops to a preset charging capacity threshold.

The charging threshold may be set according to the actual situation. Preferably, the charging threshold may be set to 20% to ensure that the robot can have enough power to complete a series of steps of the charging method and move to the charging area to complete automatic charging before the power runs out.

The step S1 may be a periodically performed detection step, i.e. periodically performing detection for the remaining capacity, so as to determine whether the remaining capacity drops to the charging power threshold. Alternatively, step S 1 may also be a passive response step, i.e. the robot automatically triggers and responds when the remaining capacity drops to the preset charging capacity threshold, so that it starts to enter the state of charge.

In other embodiments, it may also be determined that the robot enters the state of charge when receiving the charging instruction; and the charging instruction may be given by user through the device.

In some embodiments, after performing step S2, the method may further comprise the following steps.

First, taking the charging positioning point as a starting point, the robot moves to a charging area to perform the cleaning task.

The "cleaning task" refers to the task carried out by the working device carried by the robot, which is used to clear or clean the unnecessary sundries in a specific area. For example, the cleaning task may be a task of removing snow, which is performed by snow removal device.

Then, after the cleaning task, the robot returns to the charging positioning point.

Through the execution of cleaning task, sundries or obstacles in the charging area can be effectively removed, so as to facilitate the smooth progress of subsequent automatic charging. Specifically, whether the cleaning task is over can be determined in many ways. For example, if the robot body is equipped with a camera, it can be determined whether the snow in the charging area has been cleaned by taking an image of the charging area.

Finally, the robot rotates by a preset angle so that the end where the electric energy receiving device is arranged faces the charging area.

The working device and the electric energy receiving device are usually not arranged in the same position of the robot body. For example, as shown in Fig. 1, the working device and the electric energy receiving device are respectively arranged at the front part and the rear part of the robot body.

Therefore, after the cleaning task is completed, it is required to control the robot to rotate at an appropriate angle (for example, 180°), so that the end provided with the electric energy receiving device faces the charging area before the subsequent automatic charging operation can be continued.

Based on the charging method and robot charging system provided in the above embodiments, the application also provides robots equipped with other working devices. The following are introduced with the attached drawings.
1) In the golf course, the hit golf balls are often scattered in all parts of the golf course. If the ball is picked up manually, the overall efficiency would be low, and it is easy to be injured by golf balls. Therefore, as shown in Fig. 8A, an embodiment of the present application provides a robot equipped with a golf ball recycling device. Its robot body 31 is equipped with a golf ball recycling device 32A, which can move in the golf course by itself and recycle the scattered golf balls through the golf ball recycling device 32A.
   Please continue to refer to A of Fig. 8. When the power of the robot body 31 is reduced to the preset power threshold, the robot can move to the upper surface of the charging base by itself through the above-mentioned fusion positioning mode, and the robot can be charged by the charging base through the above-mentioned contactless power transmission system, so as to ensure that the robot can run for a long time.
2) In the rainy season such as spring and summer, the grass on the lawn grows vigorously and needs frequent care and pruning to keep the lawn flat. Traditional hand-held lawn mowers (including cutterhead and straw rope type) or hand-pushed lawn mowers need to rely on manpower, and the overall efficiency is low.

In order to improve the use efficiency, there are also some mowing robot that can mow grass automatically in designated areas. However, due to the limited battery capacity of the robot, it is necessary to set up the automatic charging function to maintain the long-term operation of the mowing robot. However, the existing solution based on optical positioning tends to be greatly disturbed in bad weather, resulting that the robot could not be able to return to the charging position correctly. There are also some positioning solutions based on wire tracing, but such solutions are prone to the situation that mowing robot cut off wires.

Thus, as shown in B of Fig. 8, an embodiment of the present application provides a robot equipped with a mowing device 32B. Its robot body 31 is equipped with mowing device 32B, which can move on the lawn in the designated area by itself, and mow the lawn by mowing device 32B.

Please continue to refer to B of Fig. 8. When the power of the robot body 31 dropped to the preset power threshold, the robot can move to the upper surface of the charging base 40 by the above-mentioned fusion positioning method, and the robot can be charged by the charging base 40 through the above-mentioned contactless power transmission system, so as to ensure the robot can run for a long time. This fusion positioning method has strong anti-interference ability, is not easy to be affected by bad weather, and does not cause wire cut, etc., and has strong reliability.

3) In autumn, on the lawn or in the courtyard, leaves will continuously fall and pile up on the ground. The traditional way to clean the fallen leaves is to use tools such as leaf harrow and hand-held leaf blower to collect the fallen leaves together and then clean them. The whole cleaning process depends on manpower, which is inefficient and takes time.

Thus, as shown in C of Fig. 8, an embodiment of the present application provides a robot equipped with a leaf cleaning device 32C. Its robot body 31 is equipped with a leaf cleaning device 32C, which can blow the fallen leaves scattered on the ground to the designated position for collection according to the planned path, so as to facilitate the subsequent cleaning and maintain the cleanliness of the yard.

Please continue to refer to C of Fig. 8. When the power of the robot body 31 drops to the preset power threshold, the robot can move to the upper surface of the charging base 40 by itself through the above-mentioned fusion positioning method, and the robot can be charged by the charging base 40 through the above-mentioned contactless power transmission system, so as to ensure that the robot can run for a long time. This fusion positioning method has strong anti-interference ability, is not easy to be affected by bad weather, and does not cause wire cut, etc., and has strong reliability.

Fig. 9 is a charging device provided by an embodiment of the present application. The charging device can be realized by the robot through software/hardware or the combination of software and hardware. As shown in Fig. 9, the charging device 100 includes a pre-positioning module 110, a secondary positioning module 120 and a receiving & enabling module 130.

The pre-positioning module 110 is used for the robot to move to the preset charging positioning point after entering the state of charge. The secondary positioning module 120 is used to move to the charging area according to a preset route with the charging positioning point as the starting point, and detect whether it reaches a preset target charging position in the process of moving along the preset route; when reaching the target charging position, the robot is controlled to stop moving. The receiving & enabling module 130 is used to receive the electric energy provided by the electric energy supply device through the electric energy receiving device.

In some embodiments, referring to Fig. 9, the charging device further includes an capacity detection module 140 and a cleaning module 150.

The capacity detection module 140 is used to determine that it needs to perform the automatic charging function when the remaining capacity drops to the preset charging capacity threshold. The cleaning module 150 is used to move to the charging area from the charging positioning point to perform cleaning tasks before secondary positioning; returning to the charging positioning point after the cleaning task is finished; and rotating a preset angle so that the end provided with the electric energy receiving device faces the charging area.

It should be noted that in the embodiment of this application, the functional modules are named according to functionality, and are taken as an example to describe the method steps to be realized by the charging device. It can be clearly understood by those skilled in the art that, for the convenience and conciseness of description, the specific working processes of the devices and modules described above can refer to the corresponding processes in one or more of the above method embodiments, and are not repeated here.

Those skilled in the art can realize that although the functional modules of the charging device are divided according to the method steps to be executed in the embodiment of the application, one or more functional modules in the charging device of the embodiment of the present application may be split into more functional modules or integrated into fewer functional modules according to the needs of the actual situation, so as to execute the corresponding method steps.

Fig. 10 is an electronic device provided by an embodiment of the present application. The electronic device can be realized by the aforementioned robot to perform one or more steps in the charging method of the above embodiment. As shown in Fig. 10, the electronic device 200 may include a processor 210, a memory 220, a communication bus 230, a communication module 240 and an external device 250. Apparently, it can omit one or more of the above devices, and it can also add some other types of devices, which are not limited to the above devices.

The processor 210 may be any suitable processor or processor set. Specifically, the processor 210 is a multi-core processor capable of multithreading. Memory 220 may be any suitable storage device, such as ROM, RAM, flash memory or large-capacity mechanical storage device, such as CD-ROM, hard disk, etc. The memory 220 is used to store computer running programs executed by the processor 210 and preset for various data processing.

The communication module 240 may include some network interactive devices for establishing communication connection through a connection network to establish a data transmission channel between the electronic device and external side. External device 250 includes, but is not limited to, various types of sensor and input/output devices (for example, keyboard, mouse and display). The display may include any type of computer playback device or electronic playback device (such as CRT or LCD-based device) for displaying information to users.

In practical application, the processor 210 and the memory 220 communicate with each other through the communication bus 230. Processor 210 can call the computer in memory 220 to run programs and perform some logical operations. For example, the processor 210 may perform some or all steps of the charging method described or disclosed in the embodiment of the present application on the received RTK signal or sensor signal to guide the robot body to move to the target charging position.

The embodiment of the application also provides a computer-readable storage medium. The computer-readable storage medium may be a nonvolatile storage medium. And the computer-readable storage medium stores a computer program. When the compute program is executed by the processor, one or more steps of the charging method can be realized. A complete computer program product is embodied on one or more computer-readable storage media (including but not limited to magnetic disk memory, CD-ROM, optical memory, etc.) containing the computer program disclosed in the embodiments of the present application.

The above embodiments are merely used to illustrate the technical solution of the present application, rather than limit it. With the idea of this application, the technical features in the above embodiments or different embodiments may also be combined, and the steps may be implemented in any order. There are many other changes in different aspects of this application as mentioned above, which are not provided in details for brevity. Although the application has been described in detail with reference to the foregoing embodiments, it should be understood by those skilled in the art that it is still possible to modify the technical solutions described in the foregoing embodiments, or equivalently replace some technical features thereof. These modifications and equivalents do not make the nature of the corresponding technical solution deviates from the spirit and scope of the present application, and shall be included in the protection scope of the present application.

## Claims

1. A charging method, comprising:
after entering a charging state, a robot moves to a preset charging positioning point;
taking the charging positioning point as a starting point, the robot moves to a charging area according to a preset route; the charging area is formed by an electric energy supply device;
detecting whether a preset target charging position is reached in the process of moving along the preset route;
when reaching the target charging position, controlling the robot to stop moving, and
receiving electric energy provided by the electric energy supply device through an electric energy receiving device in the robot.

2. The charging method of claim 1, further comprising:
determining to enter into the state of charge when a remaining capacity drops to a preset charging capacity threshold; or
when a charging instruction is received, determining to enter into the state of charge.

3. The charging method of claim 1, wherein before the step of taking the charging positioning point as a starting point, the robot moves to a charging area according to a preset route, the method further comprises:
taking the charging positioning point as a starting point, controlling the robot to move to the charging area to perform a cleaning task;
returning to the charging positioning point after determining that the cleaning task is finished;
and
controlling the robot to rotate by a preset angle so that an end provided with the electric energy receiving device faces the charging area.

4. The charging method of claim 1, wherein the step of taking the charging positioning point as a starting point, the robot moves to a charging area according to a preset route, further comprises:
obtaining changes of magnetic induction intensity of a plurality of different positioning beacons through a sensor in the robot; the plurality of the positioning beacons are located at different positions of the electric energy supply device;
determining whether a moving direction of the robot deviates from the preset route according to the changes of magnetic induction intensity of different positioning beacons;
controlling the robot to move along the current moving direction when the moving direction of the robot does not deviate from the preset route; and
when the moving direction of the robot deviates from the preset route, adjusting the moving direction of the robot to be consistent with the preset route.

5. The charging method of claim 4, wherein the plurality of positioning beacons comprise a first positioning beacon for generating a first magnetic field, a second positioning beacon for generating a second magnetic field and a third positioning beacon for generating a third magnetic field;
the step of determining whether a moving direction of the robot deviates from the preset route according to the changes of magnetic induction intensity of different positioning beacons comprises:
when the sensor in the robot only acquires the second magnetic field, determining that the moving direction of the robot does not deviate from the preset route;
when the sensor in the robot acquires the first magnetic field or the third magnetic field, determining that the moving direction of the robot deviates from the preset route.

6. The charging method of claim 5, wherein the second positioning beacon is arranged on the preset route; the first positioning beacon and the third positioning beacon are respectively arranged on a left side and a right side of the preset route;
the step of adjusting the moving direction of the robot to be consistent with the preset route when the moving direction of the robot deviates from the preset route comprises:
when the sensor in the robot acquires the first magnetic field of the first positioning beacon, controlling the robot to move back by a first preset distance;
after moving back by the first distance, controlling the robot to move to the right by a second preset distance;
after moving by the second distance to the right, controlling the robot to move to the charging area again; or
when the sensor in the robot obtains the third magnetic field of the third positioning beacon, controlling the robot to move back by the first preset distance;
after moving back by the first distance, controlling the robot to move to the left by the second preset distance;
after moving by the second distance to the left, controlling the robot to move to the charging area again.

7. The charging method of claim 1, wherein the step in which the robot moves to a preset charging positioning point further comprises:
determining the charging positioning point according to a position of the electric energy supply device, wherein a distance between the charging positioning point and the electric energy supply device is a preset distance threshold; and
controlling the robot to move to a preset signal intensity point based on a position information provided by RTK positioning system, and controlling the robot to move to the charging positioning point based on the signal intensity point.

8. A robot, comprising:
a working device; the working device is configured to execute work tasks correspondingly;
a robot body; the robot body is fixedly connected with the working device and configured to drag the working device to move;
an electric energy receiving device; the electric energy receiving device is arranged on the robot body;
a sensor; the sensor is arranged on the robot body; and
wherein the robot body is configured to perform the charging method of any one of claims 1 to 7.

9. The robot of claim 8, wherein the working device is arranged at a front part of the robot body; the electric energy receiving device and the sensor are both arranged at a rear part of the robot body;
the working device is selected from at least one of the following devices:
a snow removal device, configured to clean snow;
a golf ball recycling device, configured to recycle golf balls;
a mowing device, configured to mow lawn; and
a leaf cleaning device, configured to blow away fallen leaves.

10. A robot charging system, comprising:
the robot of claims 8 or 9;
a charging base; an electric energy supply device and a plurality of positioning coils are arranged in the charging base;
a RTK base station and a corresponding RTK antenna; the RTK antenna is arranged on the robot; and
wherein the electric energy supply device forms a charging area; the plurality of positioning coils are arranged at different positions for providing direction and position information guidance for the robot.

11. The robot charging system of claim 10, wherein the charging base further comprises a base housing;
the electric energy supply device is accommodated in the base housing, and a charging area is formed on at least a part of a surface of the base housing; and
different positioning coils are arranged at different positions of the base housing for forming corresponding magnetic fields.

12. The robot charging system of claim 11, wherein the electric energy supply device comprises: a transmitting coil; and
wherein, the transmitting coil is located in a center of the charging base, accommodated inside the charging base, and the charging area is formed on an upper surface of the charging base.

13. The robot charging system of claim 12, wherein the transmitting coil is located in a center of the base housing, and the charging area is formed on an upper surface of the base housing.

14. The robot charging system of claim 12, wherein the positioning coil comprises:
a plurality of positioning beacons; the positioning beacons are arranged at a preset distance along a first straight line direction;
an in-position detection coil; the in-position detection coil is located at one side of the transmitting coil, and the positioning beacons are arranged at another side of the transmitting coil.

15. The robot charging system of claim 14, wherein the plurality of positioning beacons comprise a first positioning beacon, a second positioning beacon and a third positioning beacon;
the first positioning beacon, the second positioning beacon and the third positioning beacon are sequentially arranged at intervals along the first straight line direction; the second positioning beacon, the transmitting coil and the in-position detection coil are sequentially arranged along a second straight line direction; and
the first straight line direction is perpendicular to the second straight line direction, and widths of the second positioning beacon and the in-position detection coil in the first straight line direction are larger than those of the first positioning beacon and the third positioning beacon.

16. The robot charging system of claim 15, wherein the first positioning beacon is used for generating a first magnetic field; the second positioning beacon is used for generating a second magnetic field; the third positioning beacon is used for generating a third magnetic field; and
wherein the first magnetic field, the second magnetic field and the third magnetic field have different magnetic field frequencies.

17. The robot charging system of claim 16, wherein the robot is provided with two sensors arranged at intervals;
a width of the second positioning beacon is greater than the interval between the two sensors; a width of the in-position detection coil is larger than the interval between the two sensors; the widths of the first positioning beacon and the third positioning beacon are smaller than the interval between the two sensors.

18. The robot charging system of claim 10, wherein the robot charging system further comprises:
a charging positioning point; there is a preset interval between the charging positioning point and the charging base;
the sensor is configured to cooperate with the positioning coil of the charging base to guide the robot located at the charging positioning point to move directionally, so that the electric energy receiving device enters the charging area of the charging base.

19. The robot charging system of claim 18, wherein the electric energy receiving device is configured to be coupled with the electric energy supply device of the charging base to receive electric energy from the electric energy supply device in a contactless manner when entering the charging area.

20. The robot charging system of claim 18, wherein the RTK antenna is configured to guide the robot to move to the charging positioning point.
